# EUROPEAN PATENT APPLICATION

(11) **EP 2 843 334 A1**
(43) Date of publication of application: **04.03.2015**
(21) Application number: 13181932.8
(22) Date of filing: 28.08.2013
(51) Int. Cl.: F25D 23/08, F16J 15/06

(54) **Gasket for heat insulated cabinets**

(71) Applicant: Electrolux Appliances Aktiebolag, 105 45 Stockholm (SE)
(72) Inventor: Beni, Marco, 33080 Porcia (PN) (IT); Buosi, Augusto, 33080 Porcia (PN) (IT); Velli, Vittorio, 31021 Mogliano Veneto (TV) (IT)
(74) Representative: Markovina, Paolo

(57) **Abstract**

The invention relates to a gasket (6a) for a heat insulated cabinet with a structural T-shaped root part (7) for attachment of the gasket to a door panel (2) and a counter-door panel (3), a tubular bellow part (8) for contact with a closing surface (5) of the cabinet; the structural T-shaped root part is substantially stiffer than the bellow part and the parts are attached to each other; the structural T-shaped root part includes a rib (11), a first and second side flanges (9, 10) extending opposite to each other and a slanted flange (12) extending from a second end of the rib and directed towards either the first or second side flange. A first sealing member (18) extends between the rib and the slanted flange and sealingly engages either the door panel or the counter-door panel, the first sealing member being softer than the T-shaped root part.

## Description

### Field of the invention

The present invention relates to a gasket for heat insulated cabinets, in particular refrigerators and freezers.

### Background art

Gaskets are commonly provided on refrigerators' or freezers' doors comprising a door panel and a counter-door panel, to get a seal-tight closure between cabinet and door.

These gaskets typically comprise a relatively stiff structural root part for attachment of the gasket to door and counter-door panels and a relatively soft tubular bellow part for contact with a closing surface of the cabinet.

In the original installation the gasket is normally attached to the cabinet's door panel structure by nesting the substantially rigid structural root part in a gap between the cabinet door and counter-door panels before injecting thermal insulating foam in the door.

The gasket may provide means for a subsequent attachment of a replacement gasket, generally sold as a spare part to be substituted for the original gasket in case of gasket failure. Of course the spare gasket cannot be fitted with means identical to the original equipment because at that later stage the door panel structure is already filled with solid foam.

Gaskets of this type must respond to three substantial needs:
- minimize heat dispersion through the gasket itself;
- resist to the injection pressure without deformation when the cabinet door is injected with foam;
- form a good seal against leaks of foam during injection of foam in the door.

Furthermore it is appreciated that the original gasket may also provide an easy system for attachment of the replacement gasket, when the first one is worn.

The first requirement can be satisfied if the gasket thickness in a direction perpendicular to the cabinet door is minimized. As a matter of fact, the gasket offers a relatively poor insulation if compared to the insulation capacity of the foamed door and therefore it represents a weak insulation point in the whole insulated structure.

The second requirement can be satisfied by stiffening the gasket structural part, while the third requirement can be satisfied by appropriately sealing the gasket root part. These requirements are however contrasting to each other because stiffening normally requires an increase of the gasket thickness, while sealing against leaks of foam may require softening of the structural part.

Several gasket types are known in the art but none of them provides a complete and satisfactory response to all requirements.

A widely diffused gasket is known for example from US 7,219,471. This gasket includes a structural T-shaped root part for attachment of the gasket to a cabinet door and counter-door panels and a tubular bellow part. The structural part has two parallel walls intended to stiffen the gasket root part, to provide attachment for the bellow part and to form a channel adapted to receive a replacement seal. This channeled shape, however, implies that the structural part has a substantial thickness which is in full contrast with the need of minimizing heat dispersion through the gasket itself.

Another gasket type is known from EP 1 848 941. Several gasket designs are shown in the document. They are either subject to the same thickness problem mentioned with regard to US'471 or to poor seal properties against leaks of foam during door panel injection. The attachment of a replacement gasket is also quite critic because it requires a snap engagement between two structural parts that have to be superimposed to each other. This structure further increases the total thickness of the gasket.

EP 0 319 087 discloses another gasket type. The attachment of the structural T-shaped part to the counter-door panel is relatively difficult as it requires that a hook part of the root portion be clipped to the counter-door panel free edge. Also the system for attaching a replacement gasket is inefficient, since the replacement gasket remain attached to the root portion only by one side lip.

Other gaskets for refrigerated cabinets are disclose in EP 905 464, EP 1 267 136, US2007/0084125, and WO03/052334. All these examples do not provide however a satisfactory response to the above mentioned needs.

### Summary of the invention

The problem underlying the present invention is to provide a gasket having an improved structure that allows minimizing heat dispersion and at the same time offers a strong resistance to the injection pressure both against deformation and leaks of foam while foaming the cabinet door.

This problem is resolved by an improved gasket according to the invention as claimed in the attached claims.

According to the invention it is provided a gasket having a structural T-shaped root part for attachment of the gasket to a door panel and a counter-door panel of an appliance cabinet and a tubular bellow part for contact with a closing surface of the cabinet. The T-shaped root part is substantially stiff and the bellow part is substantially soft compared to each other. The parts are attached to each other to form a unitary element.

The T-shaped root part includes a rib designed to extend through an opening between the door panel and the counter-door panel and it includes a first and second side flanges extending opposite to each other from a first end of the rib and designed to face external sides of the door panel and the counter-door panel, respectively, and a slanted flange extending from a second end of the rib and directed towards either the first or the second side flange.

Sealing members are formed on said structural T-shaped root part for sealingly engaging at least one of the door panel and counter-door panel and they include a first sealing member extending between the rib and the slanted flange and sealingly engaging with either the door panel or the counter-door panel, the first sealing member being substantially soft as compared to the T-shaped root part.

According to a preferred embodiment, the gasket further includes a second sealing member extending between the rib and the first side flange and sealingly engaging with the counter-door panel in order to increase the sealing engagement between the root part and the counter-door panel. Preferably, both said first and said second sealing members sealingly engage the counter-door panel at an edge thereof, in order to further increase the sealing engagement between the root part and the counter-door panel.

According to a further preferred aspect, the first sealing member extends between an intermediate portion of the rib and a free edge of the slanted flange thus advantageously forming a closed space therebetween.

According to a further preferred embodiment, the first sealing member has a ridge abutting the counter-door panel, thus advantageously stiffening the structure of the gasket for ease of installation to the cabinet door structure.

Preferably, one of said side flanges has a stiffening flange projecting from an intermediate portion thereof in a direction opposite said rib. Always preferably, the stiffening flange projects from the first side flange and forms with the first side flange a seat wherein a corresponding wall of the bellow part is nested.

This advantageously provides an increased elastic modulus of the T-shaped root part while maintaining the thickness of the gasket substantially unchanged. The resistance of the gasket is thereby improved.

According to another preferred aspect, a mushroom head shaped rim is provided on second side flange for attaching a replacement gasket.

It will be appreciated that this aspect helps in allowing an easy attachment of a replacement gasket.

According to a further aspect, the invention also provides a heat insulated cabinet including at least one openable cabinet door with a door panel and a counter-door panel and a gasket fitted to said cabinet door at said door and counter-door panels, wherein the gasket has the features described in connection to the previous aspects of the invention.

### Preferred embodiments of the invention

Further features and advantages of the invention will appear from the following description of two preferred embodiments thereof shown by way of example in the attached drawings in which:
- Fig. 1 schematically illustrates, in a perspective view, a refrigerator appliance, particularly a refrigerator, according to the invention.
- Fig. 2 is cross section of a thermally insulated cabinet (represented only in part) with a gasket according to a first embodiment of the present invention;
- Fig. 3 is cross section of a thermally insulated cabinet (represented only in part) with a gasket according to a second embodiment of the present invention; and
- Fig. 4 is cross section of a thermally insulated cabinet (represented only in part) with a gasket according to a third embodiment of the present invention.

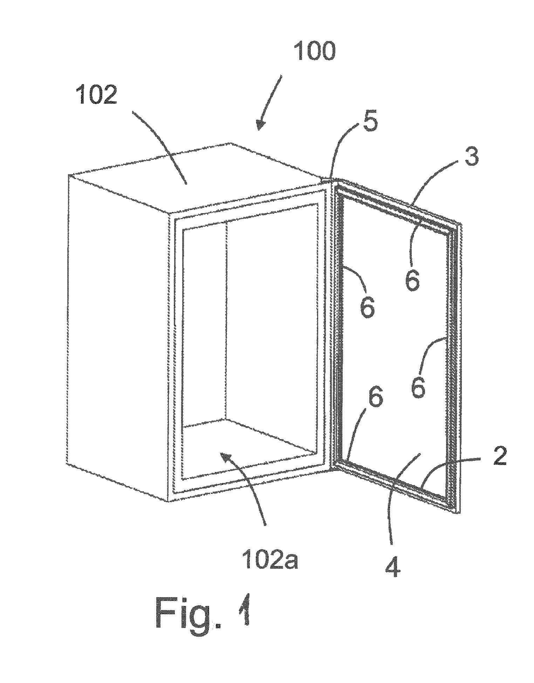

With reference to Fig. 1, a cooling appliance according to the invention is indicated with the number 100. The cooling appliance 100 is a refrigerator, a freezer, or a combined refrigerator.

Appliance 100 includes a cabinet 102 whose walls present a desired thermal isolation; the inside of the cabinet 102 is refrigerated through a refrigerating circuit, not illustrated, and defines one or more internal spaces or compartments 102a for storing alimentary products, which can communicate one with the other or being separate.

The appliance 100 includes a door 4 to allow access to the inside the cabinet 102; the door 4 is preferably coupled to the cabinet 102 in a revolving fashion, through hinges.

In the illustrated example the cabinet 102 is open frontally, but the invention may also be applied in substantially identical fashion to a cabinet opening from above. Moreover, in the illustrated example the cabinet 102 is provided with a single door 4, but there could also be more than one door, each for closing a respective internal space of the cabinet 102.

The door 4 comprises a door panel 2 and a counter-door panel 3 and is provided along its internal perimeter with a gasket 6 which sealingly engages a closing surface 5 of the cabinet 102.

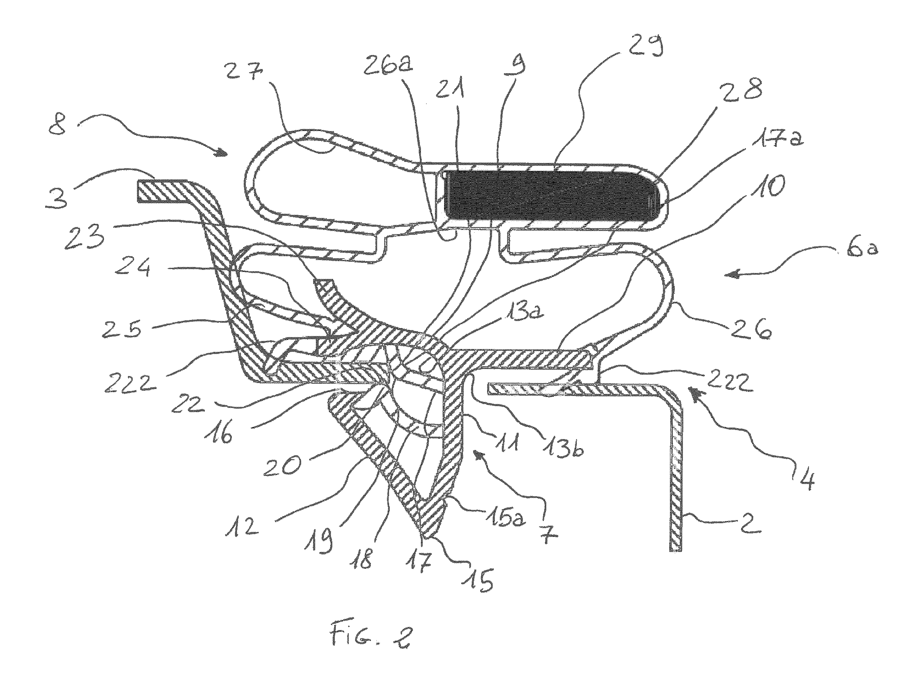

Figs. 2, 3 and 4 show three different embodiments of gaskets according to the invention, numbered 6a, 6b and 6c respectively.

The gaskets 6a, 6b and 6c are almost identical (except for a minor additional feature in embodiment 6b and 6c) and the same reference numerals indicate identical parts.

Both gaskets 6a, 6b and 6c include a structural T-shaped root part 7 for attachment of the gasket to the door 4 and a tubular bellow part 8 for contact with the closing surface 5 of the cabinet 102.

The structural T-shaped root part 7 is stiffer than the bellow part 8 and said parts 7, 8 are attached to each other by co-molding or co-extrusion of respective appropriate plastic materials to form an unitary single-piece gasket.

The structural T-shaped root part 7 includes first 9 and second 10 substantially co-planar adjoining side flanges and a rib 11 substantially perpendicular to flanges 9 and 10. The side flanges 9, 10 extend opposite to each other from a first end of the rib 11 and join the rib 11 with concave surfaces 13a, 13b having different radiuses, i.e. larger for flange 9 e smaller for flange 10.

The rib 11 extends opposite the tubular bellow part 8 and has a first and second contiguous portion 11a, 11b slightly angled to each other.

A slanted flange 12 extends from a second end 15 of the rib 11 opposite the flanges 9, 10, toward the fist side flange 9. Close to this end of the rib 11 there is an indentation 15a to increase the flexibility of the rib 11 itself. The slanted flange 12 diverges from the rib 11 in the direction of flange 9 and is terminated with a hook portion 16.

The bellow part 8 is contained in the space delimited on one side by the door panel 2 and the counter-door panel 3, and on the other side by the closing surface 5 of the cabinet 102. The structural T-shaped root part 7 is partly contained in this same space, and partly in the space on the other side of the door panel 2 and counter-door panel 3. In particular, between the door panel 2 and the counter-door panel 3 there is a gap 31 through which the rib 11 extends, so that the two side flanges 9 and 10 are on the same space of the bellow part 8, while most of the rib 11 and the slanted flange 12 are located in the opposite space.

The flange 12 has mainly the function of fixing the gasket 6 to the door and counter-door panels 2, 3. For this scope, the flange 12 has a certain degree of flexibility about the edge 15, so as to allow (when flexed towards the rib 11) the insertion of the rib 11 and the flange 12 itself through the gap 31. For attaching the gasket to the door, the rib 11 and the flange 12 are inserted through the gap 31 until the flanges 9 and 10 face the external sides of the counter-door panel 3 and the door panel 2, respectively. During insertion, the flange 12 is kept flexed and close to the rib 11 due to the contact with the edge of the counter-door panel 3. Once completely inserted, the flange 12 can snaps open and the hook portion 16 abuts against the internal side of the counter-door panel 3, so as to avoid the detachment of the gasket 6 from the door and counter-door panels 2, 3, thus realizing a fixed attachment between the gasket door and counter-door panels 2, 3.

Sealing members are formed on the structural T-shaped root part 7 for sealing engaging the gasket 6a with the cabinet door panel 2 and counter-door panel 3.

A first sealing member 18 extends between the rib 11 and the slanted flange 12 and sealingly engages with the counter-door panel 3, in such a way as to resist to foam injection pressure without deformation when the cabinet door is injected with foam, and to form a good seal against leaks of foam during injection of foam in the door.

In more detail, the first sealing member 18 extends between a mid portion of the rib 11 and the hook portion 16 and has a ridge abutting the internal side of the counter-door panel 3, close to the edge thereof.

Advantageously, in order to increase the sealing engagement between the root part 7 and the counter-door panel 3, a second sealing member 17 is provided, which extends between the rib 11 and the flange 9, at respective mid portions thereof, and abuts against the edge of the counter-door panel 3.

The sealing members 17, 18 are both made of a plastic material which is softer than the material used for the T-shaped part 7. The second sealing member 17 has a concave surface 17a facing the concave surface 13a and forming therewith a tubular closed structure. Similarly, the first sealing member 18 forms a tubular closed structure with the slanted flange 12 and the lower part of the rib 11.

Therefore, the first and second sealing members 18, 17 converge toward each other at the edge of the counter-door panel 3 and both sealingly engage with such edge. To further enhance the sealing effect between the gasket 6a and the door and counter counter-door panels 2, 3, a third and a fourth sealing members 222, 223 are provided at the opposite edges of the first and second side flanges 9, 10, for sealingly coupling the edges of the first and second side flanges 9, 10 with the counter-door panel 3 and the door panel 2, respectively.

A stiffening flange 23 is formed on the first side flange 9, opposite the rib 11.The stiffening flange 23 is arched with a convexity facing the side flange 9 and extends from an intermediate part thereof toward the closing surface 5 of the cabinet 102, by progressively diverging from the side flange 9. The free end of the flange 23 defines an abutment surface for the tubular bellow part 8 of the gasket, preventing part 8 to excessively collapse. The gasket 6a may comprise other similar stiffening flanges and/or abutment surfaces, for example connected to the second side flange 10.

A seat 24 is formed between the end of the first flange 9 and the stiffening flange 23, and a first side wall 25 of the bellow part 8 is nested into said seat. It has to be noted that the arched structure of the stiffening flange 23 provides an increased elastic modulus of the T-shaped root part while maintaining the thickness of the gasket substantially unchanged. The resistance of the gasket is thereby improved.

The bellow part 8 includes a second side wall 26 opposed to the first side wall 25; both walls 25 and 26 are attached to a flattened tubular part 26a at an intermediate section thereof. Tubular part 26a is divided in two adjacent chambers 27, 28, one of which contains magnetic material 29 and the other one is just filled with air. The magnetic attraction between the magnetic material 29 and the closing surface 5 of the cabinet 102, containing ferromagnetic material on its turn, causes the door 4 to be attracted against the closing surface 5 of the cabinet 102 so that it normally remains closed on the cabinet.

Another chamber is defined in the space delimited by the two side walls 25, 26, the tubular part 26a and the two flanges 9 and 10.

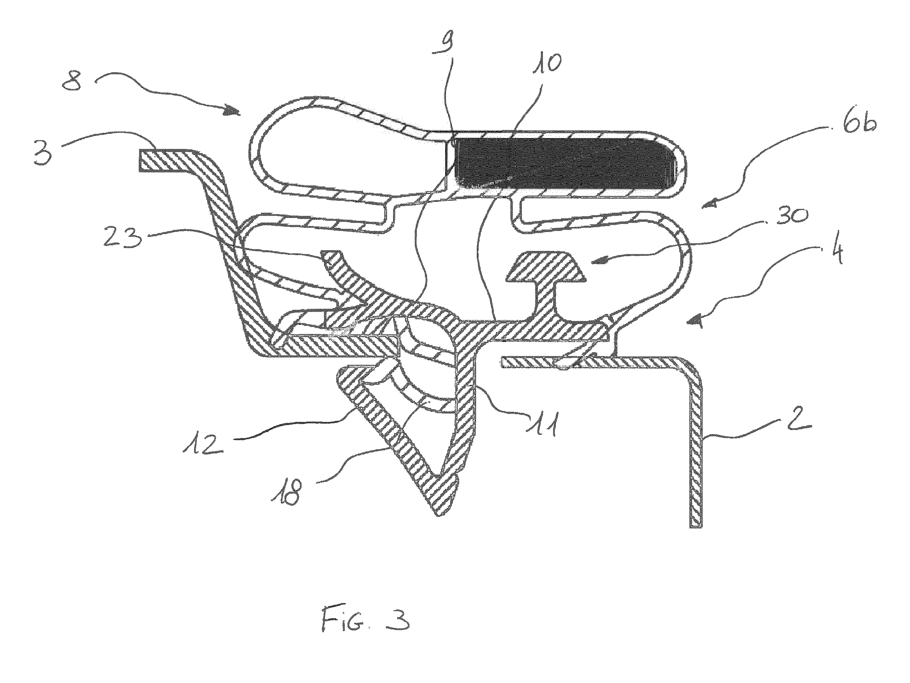

The above disclosure applies to any embodiment of the present invention. The embodiment 6b of Fig. 3 differs from the embodiment 6a by comprising a mushroom head shaped rim 30 extending from the second side flange 10 in the direction of the closing surface 5 of the cabinet 102. In particular, both rim 30 and flange 23 extend within the space contained in the bellow part 8. The mushroom head 30 is intended for attachment of a complementary profile of a replacement gasket (not shown) which can be used to replace the bellow part 8 when worn or damaged.

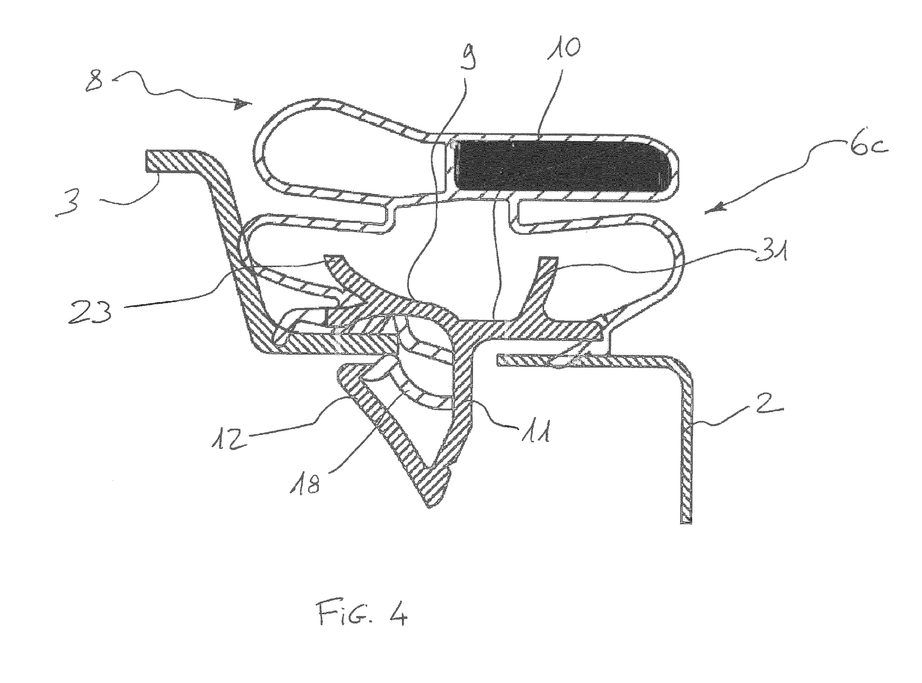

With reference to Fig. 4, according to a further embodiment, the gasket 6c comprises a stiffening member 31 projecting from an intermediate part of the second side flange 10 in the direction of the closing surface 5 of the cabinet 102. The stiffening member 31 contributes in improving the resistance of the gasket, similarly to the stiffening flange 23.

As it can be appreciated from Fig. 4, the stiffening member 31 is substantially symmetrical to the stiffening flange 23 with respect to the rib 11. Therefore, always according to a preferred embodiment, the stiffening member 31 has an elongate shape and it is arched with a convexity facing the second side flange 10. Always preferably, the stiffening member 31 progressively diverge from the second side flange 10, defining an abutment surface for the tubular bellow part 8 of the gasket, preventing part 8 to excessively collapse.

In a possible variant of the invention, the slanted flange 12 is directed toward the door panel 2 (i.e. toward the second side flange 10) instead of the counter-door panel 3 and the first and second sealing members 18, 17 sealingly engage with the edge of the door panel 2.

The gasket of the present invention solves the proposed technical problem and offers several advantages, including:
- a relatively thin profile which minimize heat loss trough the gasket structure, thanks to the combination of elements having different stiffness therebetween;
- a strong and efficient structure for ease of installation to the cabinet door structure, thanks to the use of the first sealing member, which is softer than the T-shaped root part and sealingly engages with either the door panel or the counter-door panel ; and
- a reliable sealing system for avoiding foam losses during foaming of the door, thanks again to the first sealing member sealingly engaging with the counter-door panel, in such a way as to resist to foam injection pressure without deformation.

## Claims

1. A gasket (6a; 6b; 6c) for a heat insulated cabinet (102) including:
- a structural T-shaped root part (7) for attachment of the gasket to a door panel (2) and a counter-door panel (3) of an appliance cabinet,
- a tubular bellow part (8) for contact with a closing surface (5) of the cabinet,
- said structural T-shaped root part (7) being stiffer than said bellow part (8) and being attached to said bellow part (8) to form a unitary element,
- said structural T-shaped root part (7) including a rib (11) designed to extend through an opening between the door panel (2) and the counter-door panel (3), a first (9) and second (10) side flanges extending opposite to each other from a first end of the rib (11) and designed to face external sides of the door panel (2) and the counter-door panel (3), respectively, and a slanted flange (12) extending from a second end of said rib (11) and directed towards either said first or said second side flange,
- sealing members being formed on said structural T-shaped root part (7) for sealingly engaging at least one of said door panel (2) and counter-door panel (3),
- **characterized in that** the sealing members include a first sealing member (18) extending between said rib (11) and said slanted flange (12) and sealingly engaging with either the door panel (2) or the counter-door panel (3), said first sealing member (18) being softer than said T-shaped root part (7).

2. The gasket (6a; 6b; 6c) according to claim 1, further including a second sealing member (17) extending between said rib (11) and the first side flange (9) and sealingly engaging with the counter-door panel (3).

3. The gasket (6a; 6b; 6c) according to claim 1 or 2, wherein said first sealing member (18) extends between an intermediate portion of said rib and a free edge of the slanted flange to form a closed space there between.

4. The gasket (6a; 6b; 6c) according to any of the preceding claims, wherein the first sealing member (18) has a ridge abutting the counter-door panel (3).

5. The gasket (6a; 6b; 6c) according to claim 2, wherein said second sealing member (17) has opposite edges fixed to said first flange (9) and rib (11) respectively, at respective intermediate positions thereof, said first sealing member (17) delimiting with said first flange (9) and rib (11) a closed space.

6. The gasket (6a; 6b; 6c) according to claim 2 wherein both said first and said second sealing members (17, 18) sealingly engage the counter-door panel (3) at an edge thereof.

7. The gasket (6a; 6b; 6c) according to anyone of the preceding claims, wherein one of said side flanges (9, 10) has a stiffening flange (23) projecting from an intermediate portion thereof in a direction opposite said rib (11).

8. The gasket (6a; 6b; 6c) according to claim 7 wherein said stiffening flange (23) project from the first side flange (9) and forms with the first side flange a seat (24) wherein a corresponding wall (25) of the bellow part is nested.

9. The gasket (6a; 6b; 6c) according to one or more of the preceding claims wherein a mushroom head shaped rim (30) is provided on said second side flange (10) for attaching a replacement gasket.

10. A heat insulated cabinet (102) including at least one openable cabinet door with a door panel (2) and a counter-door panel (3) and a gasket (6a; 6b; 6c) fitted to said cabinet door at said door (2) and counter-door panels (3), said gasket (6a; 6b; 6c) being made in accordance to any of the preceding claims.
